# EUROPÄISCHE PATENTSCHRIFT

(11) **EP 1 320 765 B1**
(45) Veröffentlichungstag und Bekanntmachung des Hinweises auf die Patenterteilung: **10.11.2004**
(21) Anmeldenummer: 01969693.9
(22) Anmeldetag: 05.09.2001
(51) Int. Cl.: G01S 13/93, B60K 31/00, G08G 1/16

(54) **VERFAHREN ZUM BETRIEB EINES FAHRERASSISTENZSYSTEMS FÜR KRAFTFAHRZEUGE**
METHOD FOR OPERATING A DRIVER SUPPORT SYSTEM FOR MOTOR VEHICLES
PROCEDE POUR L'EXPLOITATION D'UN SYSTEME D'ASSISTANCE AU CONDUCTEUR POUR DES VEHICULES AUTOMOBILES

(30) Priorität: 28.09.2000 DE 10048102
(43) Veröffentlichungstag der Anmeldung: 25.06.2003
(73) Patentinhaber: Automotive Distance Control Systems GmbH, 88131 Lindau (DE)
(72) Erfinder: MASSEN, Joachim, 81547 München (DE)
(74) Vertreter: Blum, Klaus-Dieter
(86) Internationale Anmeldenummer: PCT/EP2001/010192
(87) Internationale Veröffentlichungsnummer: WO 2002/027351

(56) Entgegenhaltungen:
- EP-A- 0 782 008
- DE-A- 19 821 163
- DE-A- 19 851 434
- US-A- 5 745 870

## Beschreibung

Fahrerassistenzsysteme zur Unterstützung und Entlastung der Bediener von Kraftfahrzeugen sind seit einigen Jahren in der Erprobung und teilweise bereits auf dem Markt. In diesem Zusammenhang sind insbesondere abstandsgesteuerte Geschwindigkeitsregelsysteme, sogenannte ACC-Systeme (Adaptive Cruise Control) zu nennen, bei denen im höheren Geschwindigkeitsbereich des Kraftfahrzeugs (ca. 40 km/h bis 160 km/h) Zielobjekte automatisch detektiert werden und komfortabel, d.h. mit limitierten Beschleunigungs- bzw. Verzögerungswerten, auf für die eigene Fahrt als relevant klassifizierte Zielobjekte durch Anpassung der eigenen Fahrgeschwindigkeit reagiert wird. Zusätzlich kann der Bediener des Kraftfahrzeugs durch (bsp. optische oder akustische) Warneinrichtungen über das "Gefahrenpotential" von Zielobjekten informiert werden und vor potentiellen Kollisionen mit sich schnell nähernden Hindernissen gewarnt werden. Die Fahrerassistenzsysteme werden in der Regel vom Bediener des Kraftfahrzeugs manuell ein- und ausgeschaltet und können durch den Fahrer übersteuert und/oder deaktiviert werden.

Wünschenswert ist es, den Geschwindigkeitsbereich des Kraftfahrzeugs für das Geschwindigkeitsregelsystem zu niedrigeren Fahrzeuggeschwindigkeiten hin zu erweitern, insbesondere auch eine Regelung der Geschwindigkeit des eigenen Kraftfahrzeugs bis zum Stillstand vorzunehmen; hiermit läßt sich bsp. eine "stop and go"-Funktion realisieren, über die bei Annäherung an einen Stau automatisch auf das bereits stehende letzte Fahrzeug aufgeschlossen oder vor anderen Hindernissen angehalten wird. Allerdings erfordert die Zulassung eines größeren Geschwindigkeitsbereiches für die Geschwindigkeitsregelung und der Wunsch nach einer möglichst automatischen Geschwindigkeitsanpassung in der Annäherungsphase an ruhende (sehr langsame oder stehende) Zielobjekte eine hohe Verzögerungskapazität des Geschwindigkeitsregelsystems und auch die Einbeziehung stationärer Zielobjekte (insbesondere stehender Hindernisse) in das Regelkonzept.

Bei bekannten Fahrerassistenzsystemen werden zwei unterschiedliche Betriebsmodi definiert: in der EP 0 590 588 B1 ist ein Normalfahrmodus für den "normalen" Geschwindigkeitsbereich und ein Überlastungsfahrmodus für geringe Fahrzeuggeschwindigkeiten (bsp. stop and go) vorgesehen; beim Abstands-Warnsystem der DE 32 22 263 A1 erfolgt eine Umschaltung zwischen zwei Betriebsmodi (selektive Überwachung für den komplexen Verkehr, herkömmliche Abstandsüberwachung für den "normalen" Verkehr) automatisch oder manuell. Nachteilig hierbei ist, daß die Übergänge zwischen den beiden Betriebsmodi kompliziert sind, daß die ständige Unterscheidung der beiden Betriebsmodi den Bediener des Kraftfahrzeugs überfordert (insbesondere weiß der Bediener oftmals nicht, in welchem Betriebsmodus er sich momentan befindet) und daß Fehlreaktionen des Systems in Form einer unbegründeten Bremsreaktion hohe, für den Bediener des Kraftfahrzeugs oftmals unvermittelt auftretende Verzögerungen zur Folge haben (dem Kraftfahrzeug muß ein automatisches Anhalten vor einem stehenden Hindernis ermöglicht werden), wodurch die Akzeptanz des Bedieners des Kraftfahrzeugs für ein derartiges Fahrerassistenzsystem stark beeinträchtigt wird.

Die US 5 745 870 zeigt ein Verfahren gemäß Anspruch 1 bei dem jedoch keine Eingriffsmöglichkeit für den Fahrer zur Auswahl relevanter Zielobjekte besteht.

Der Erfindung liegt die Aufgabe zugrunde, ein Verfahren gemäß dem Oberbegriff des Patentanspruchs 1 anzugeben, mit dem ein einfach zu bedienendes, leistungsfähiges Fahrerassistenzsystem über den gesamten Geschwindigkeitsbereich des Kraftfahrzeugs mit einer hohen Sicherheit und Zuverlässigkeit sowie einer hohen Akzeptanz durch den Bediener des Kraftfahrzeugs bereitgestellt wird.

Diese Aufgabe wird nach der Erfindung durch das Merkmal im Kennzeichen des Patentanspruchs 1 gelöst.

Vorteilhafte Weiterbildungen des Verfahrens sind Bestandteil der weiteren Patentansprüche.

Der Erfindung liegt die Erkenntnis zugrunde, daß beim Einbeziehen des Bedieners des Kraftfahrzeugs in nur relativ selten auftretende Fahrsituationen eine deutliche Verbesserung der Systemleistung des Fahrerassistenzsystems erzielt und gleichzeitig das Vertrauen des Bedieners in das eine Geschwindigkeitsregelung bis zum Stillstand des Kraftfahrzeugs ermöglichende Fahrerassistenzsystem gesteigert wird. Erfindungsgemäß werden daher für ein Fahrkomfort und Sicherheit gewährleistendes Fahrerassistenzsystem in Abhängigkeit einer vom Bediener des Kraftfahrzeugs vorgenommenen Betätigung eines im Kraftfahrzeug angeordneten Bedienelements im Folgebetrieb die für die Geschwindigkeitsregelung herangezogenen relevanten Zielobjekte unter den detektierten (erfaßten) Zielobjekten in Abhängigkeit deren Geschwindigkeit ausgewählt; insbesondere werden unter den detektierten (erfaßten) Zielobjekten bewegte und als relevante Zielobjekte klassifizierte Zielobjekte automatisch (immer) zur Geschwindigkeitsregelung herangezogen, ruhende (stationäre) Zielobjekte (bsp. stehende Hindernisse) dagegen nur auf Anforderung durch den Bediener des Kraftfahrzeugs, d.h. durch die Betätigung des im Kraftfahrzeug angeordneten Bedienelements. Als ruhende (stationäre) Zielobjekte werden Zielobjekte mit einer sehr geringen Geschwindigkeit eingestuft (bsp. Fußgänger oder sehr langsame Fahrzeuge oder stehende Fahrzeuge), insbesondere solche Zielobjekte, deren Geschwindigkeit einen vorgegebenen Grenzwert unterschreitet (bsp. alle Zielobjekte mit einer Geschwindigkeit von weniger als 5 km/h). Insbesondere können alle detektierten und als relevante Zielobjekte klassifizierten ruhenden Zielobjekte für die Geschwindigkeitsregelung berücksichtigt werden, insbesondere werden alle detektierten und als relevante Zielobjekte klassifizierten Zielobjekte gespeichert und während ihrer Relevanz bis zur Deaktivierung des Fahrerassistenzsystems bei der Geschwindigkeitsregelung berücksichtigt.

Die ruhenden Zielobjekte werden allerdings vorzugsweise nur zeitlich stark eingeschränkt, insbesondere unmittelbar in Zusammenhang mit der Betätigung des Bedienelements durch den Bediener des Kraftfahrzeugs, bei der Auswahl der relevanten Zielobjekte für die Geschwindigkeitsregelung berücksichtigt, insbesondere entweder nur während der Dauer der Betätigung des Bedienelements durch den Bediener des Kraftfahrzeugs und/oder eine kurze Zeitspanne nach der vom Bediener des Kraftfahrzeugs vorgenommenen Betätigung des Bedienelements (bsp. 2 s bis 3 s nach der vom Bediener des Kraftfahrzeugs vorgenommenen Betätigung). Weiterhin können die bereits vor der Betätigung des Bedienelements detektierten (erfaßten) und als relevante Zielobjekte klassifizierten ruhenden Zielobjekte durch die vom Bediener des Kraftfahrzeugs vorgenommene Betätigung des Bedienelements für die Geschwindigkeitsregelung ausgewählt werden, d.h. durch den Bediener des Kraftfahrzeugs "bestätigt" werden; diese Bestätigung kann anschließend an eine Information des Bedieners des Kraftfahrzeugs über die potentiellen relevanten Zielobjekte, bsp. durch eine optische Information des Bedieners des Kraftfahrzeugs, bsp. über Anzeigeelemente (bsp. in einem Display) einer Anzeigeeinheit, erfolgen.

Da ruhende Zielobjekte nur in Zusammenhang mit der Aktivität des Bedieners des Kraftfahrzeugs für die Geschwindigkeitsregelung berücksichtigt werden können, ist sich der Bediener des Kraftfahrzeugs seiner Handlung bewußt und auch nicht überfordert: Einerseits tritt eine Reaktion des Fahrerassistenzsystems auf ein fälschlicherweise bei der Geschwindigkeitsregelung berücksichtigtes ruhendes Zielobjekt (ein stationäres Fehlziel) auch nur unmittelbar in Zusammenhang mit der Betätigung des Bedienelements durch den Bediener des Kraftfahrzeugs auf, so daß der Bediener des Kraftfahrzeugs bereits eine gewisse Fahrzeugreaktion erwartet und somit auf diese vorbereitet ist, d.h. ihn trifft eine etwaige Fehlreaktion des Fahrerassistenzsystems (die in der Regel mit einer starken Verzögerung des Kraftfahrzeugs einhergeht) nicht völlig unvorbereitet. Andererseits können während der Berücksichtigung von ruhenden Zielobjekten bei der Auswahl der für die Geschwindigkeitsregelung relevanten Zielobjekte die für den Folgebetrieb und damit für die Geschwindigkeitsregelung herangezogenen Eingangsgrößen bzw. Regelgrößen (Regelparameter) derart verändert werden, insbesondere "kritischer" vorgegeben werden (d.h. ihnen kritischere Schwellwerte zugeordnet werden), daß die Regelung und damit das Fahrerassistenzsystem empfindlicher und schneller wird, indem die Regelzeit und/oder die Reaktionszeit der Geschwindigkeitsregelung verkürzt wird; insbesondere kann bsp. die Beobachtungsdistanz (der maximale Abstand zur Auswahl relevanter Zielobjekte durch den Distanzsensor des Fahrerassistenzsystems) erweitert werden, die Redundanz der Beobachtungszeit (die zur Klassifizierung der Zielobjekte erforderliche Anzahl an Meßzyklen, insbesondere die zur Klassifizierung der Zielobjekte als relevante Zielobjekte erforderliche Wiederholung der Meßzyklen) verringert werden oder die Verzögerung betreffende Größen (bsp. die Änderung der Verzögerung des Kraftfahrzeugs oder die maximal zulässige Verzögerung des Kraftfahrzeugs) erhöht werden. Man erhält somit einen robusten störunanfälligen Fahrbetrieb in Kombination mit einer sensiblen, schnellen Reaktion auf stehende Hindernisse.

Beim vorgestellten Fahrerassistenzsystem wird der Folgebetrieb, d.h. die abstandsabhängige Geschwindigkeitsregelung, in einem einzigen Betriebsmodus bereitgestellt, speziell für den Bereich niedriger Geschwindigkeiten bis zum Stillstand des eigenen Kraftfahrzeugs. Der Bediener des Kraftfahrzeugs kann daher in jeder Situation das entsprechende Verhalten des eigenen Kraftfahrzeugs voraussehen, so daß ein für den Bediener transparentes und einfach bedienbares Fahrerassistenzsystem realisiert wird. Der Bedienaufwand kann für den Bediener des Kraftfahrzeugs insbesondere auch dann gering gehalten werden, wenn dem Bedienelement weitere Funktionen des Fahrerassistenzsystems zugeordnet werden; insbesondere kann durch die Betätigung des Bedienelements bei deaktiviertem Fahrerassistenzsystem die Aktivierung des Fahrerassistenzsystems und nach einem Stillstand des Kraftfahrzeugs die Freigabe des Folgebetriebs (die Startfreigabe zum Weiterfahren des Kraftfahrzeugs) beim Entfernen des relevanten Zielobjekts ermöglicht werden. Insbesondere erfolgt bei einer Betätigung des Bedienelements die adäquate Reaktion des Fahrerassistenzsystems (Aktivierung des Fahrerassistenzsystems oder Berücksichtigung ruhender Zielobjekte als relevante Zielobjekte oder Freigabe des Folgebetriebs) automatisch und eindeutig aufgrund des momentanen Fahrzustands des Kraftfahrzeugs, d.h. des Systemzustands (Betriebszustands) des Fahrerassistenzsystems und der Fahrsituation des Kraftfahrzeugs (insbesondere der Eigengeschwindigkeit des Kraftfahrzeugs). Hierdurch wird dem Bediener des Kraftfahrzeugs insbesondere für den Betrieb auf Autobahnen, Landstraßen und innerstädtischen Hauptverkehrsstraßen durch die von ihm initiierte Reaktion auf ruhende Zielobjekte (bsp. stehende Fahrzeuge als Hindernisse) und der Wiederaufnahme des Folgebetriebs bei einer Weiterbewegung des ruhenden Zielobjekts eine komfortable Unterstützung bereitgestellt. Insbesondere gilt dies für besonders ermüdende Stausituationen, d.h. falls bei nahezu stillstehendem Verkehr eine Fortbewegung nur noch im Schrittempo erfolgt; hier kann nach der Reaktion auf schon stehende Fahrzeuge am Stauende und dem gegebenenfalls erfolgenden Stillstand (Anhalten) des eigenen Kraftfahrzeugs auch eine Rückkehr in den Folgebetrieb ermöglicht werden, wobei beim Entfernen des relevanten Zielobjekts entweder ein automatisches Anfahren mit geringer Geschwindigkeit, d.h. eine automatische Schleichfahrt aufgenommen wird (insbesondere um sich der typischen Staubewegung anzupassen) und erst durch die Betätigung des Bedienelements ein Folgebetrieb mit Normalgeschwindigkeit ermöglicht wird oder durch die Betätigung des Bedienelements erst ein Anfahren des eigenen Kraftfahrzeugs freigegeben wird (d.h. eine Startfreigabe erfolgt). Insbesondere falls ein automatisches Anfahren mit geringer Geschwindigkeit, d.h. eine automatische Schleichfahrt aufgenommen wird (hier sind die Bremswege noch gering) kann ein unkritischer automatischer Folgebetrieb realisiert werden (bsp. durch eine die Front des eigenen Kraftfahrzeugs abdeckende, ansonsten als Einparkhilfe vorgesehene Parksensorik) und der Bediener des Kraftfahrzeuges bei nahezu stillstehendem Verkehr durch das Fahrerassistenzsystem vollständig entlastet werden. Das Fahrerassistenzsystem kann mit weiteren Sensoren bzw. Überwachungssystemen gekoppelt werden, die bei bestimmten Aktionen des Bedieners des Kraftfahrzeugs eine Deaktivierung des Fahrerassistenzsystems und/oder weitere Maßnahmen vornehmen; bsp. kann zur Absicherung gegen ein Einnicken oder ein Aussteigen des Bedieners während der Fahrt des Kraftfahrzeugs eine Überwachung der Fahrzeugtüre(n) und/oder des Sicherheitsgurts und/oder der Augen des Bedieners erfolgen und der Bediener durch entsprechende akustische und/oder optische und/oder haptische Signale gewarnt werden.

Das Fahrerassistenzsystem kann mit bestehenden Sensortechnologien für die erforderliche Entfernungsbestimmung realisiert werden, bsp. mittels IR-Distanzsensoren oder Radar-Distanzsensoren). Das bsp. als Taste (insbesondere als Multifunktionstaste) ausgebildete Bedienelement ist im Kraftfahrzeug vorzugsweise für den Bediener des Kraftfahrzeug leicht zu erreichen angeordnet, bsp. im Lenkrad integriert oder in der Nähe des Lenkrads angeordnet.

Der Bediener des Kraftfahrzeugs kann durch das Fahrerassistenzsystem über mehrere Gegebenheiten (bsp. akustisch und/oder optisch und/oder haptisch) informiert werden, insbesondere darüber, daß das Fahrerassistenzsystem aktiviert wurde, daß ruhende Zielobjekte mit bei der Geschwindigkeitsregelung herangezogen werden, daß ein relevantes Zielobjekt detektiert wurde, daß ein bereits detektiertes ruhendes Zielobjekt bestätigt werden muß oder daß eine Kollisionsgefahr mit einem relevanten Zielobjekt besteht und eine Übernahme durch den Bediener des Kraftfahrzeugs empfohlen wird oder daß der Start des Kraftfahrzeugs freigegeben werden sollte.

Im folgenden wird ein Ausführungsbeispiel im Zusammenhang mit der Zeichnung näher erläutert.

Hierbei zeigt
- Figur 1: eine schematische Darstellung des der Entfernungsbestimmung mittels Laufzeitmessung zugrundeliegenden Prinzips,
- Figur 2: eine Ansicht des Innenraums des Kraftfahrzeugs mit der Anzeigeeinheit und der Bedieneinheit,
- Figur 3: einen schematischen vereinfachten Ablaufplan für die Funktionsweise des Fahrerassistenzsystems.

Das zur Unterstützung des Bedieners des Kraftfahrzeugs insbesondere für den Betrieb auf Autobahnen, Landstraßen und städtischen Hauptverkehrsstraßen konzipierte Fahrerassistenzsystem ist insbesondere auch für den Bereich geringer Geschwindigkeiten des eigenen Kraftfahrzeugs und der vorausfahrenden Fahrzeuge geeignet (bsp. für Stausituationen); d.h. es erfolgt eine vom Abstand zu als relevant klassifizierte Zielobjekten abhängige Geschwindigkeitsregelung bis zum Stillstand des eigenen Kraftfahrzeugs (Geschwindigkeit v = 0 km/h). Das eigene Kraftfahrzeug reagiert mittels des Fahrerassistenzsystems somit auf jedes bewegte und als relevant klassifizierte Zielobjekt in der eigenen Fahrspur und paßt sich an dessen Geschwindigkeit an und zusätzlich nach Anforderung durch den Bediener durch Betätigung eines Bedienelements auf ruhende (stationäre) und als relevant klassifizierte Zielobjekte in der eigenen Fahrspur (bsp. auf ein am Stauende stehendes Fahrzeug); weiterhin kann ein selbständiger Start des eigenen Kraftfahrzeugs nach dem Stillstand hinter einem ruhenden Zielobjekt und dem Entfernen dieses Zielobjekts ermöglicht werden.

Das Fahrerassistenzsystem umfaßt einen Distanzsensor als Meßeinheit zur Messung des Abstands zum vorausfahrenden Fahrzeug, eine Fahrzeugregeleinrichtung zur Vorgabe der Geschwindigkeit bzw. der Verzögerung des eigenen Kraftfahrzeugs, einen Drehratensensor zur Erfassung des aktuellen Kurvenradius, eine zentrale Recheneinheit als Steuereinheit und ein Interface zum Bediener des Kraftfahrzeugs mit einer Anzeigeeinheit und einer Bedieneinheit. Die Bestimmung der Entfernung und/oder Geschwindigkeit und/oder Beschleunigung von im Beobachtungsbereich befindlichen Zielobjekten, d.h. die Bestimmung des Abstands zwischen dem eigenen Kraftfahrzeug und vorausfahrenden, entgegenkommenden oder stationären Fahrzeugen, Personen und sonstigen Reflexionsobjekten und/oder der Geschwindigkeit des eigenen Kraftfahrzeugs bezüglich vorausfahrender, entgegenkommender oder stationärer Fahrzeuge, Personen und sonstiger Reflexionsobjekte und/oder der Beschleunigung des eigenen Kraftfahrzeugs bezüglich vorausfahrender, entgegenkommender oder stationärer Fahrzeuge, Personen und sonstiger Reflexionsobjekte als Basis für das Fahrerassistenzsystem muß eindeutig und mit hoher Auflösung bestimmt werden; bsp. beträgt die gewünschte Entfernungsauflösung 0.1 m, die gewünschte Geschwindigkeitsauflösung 0.3 m/s und die gewünschte Beschleunigungsauflösung 0.1 m/s².

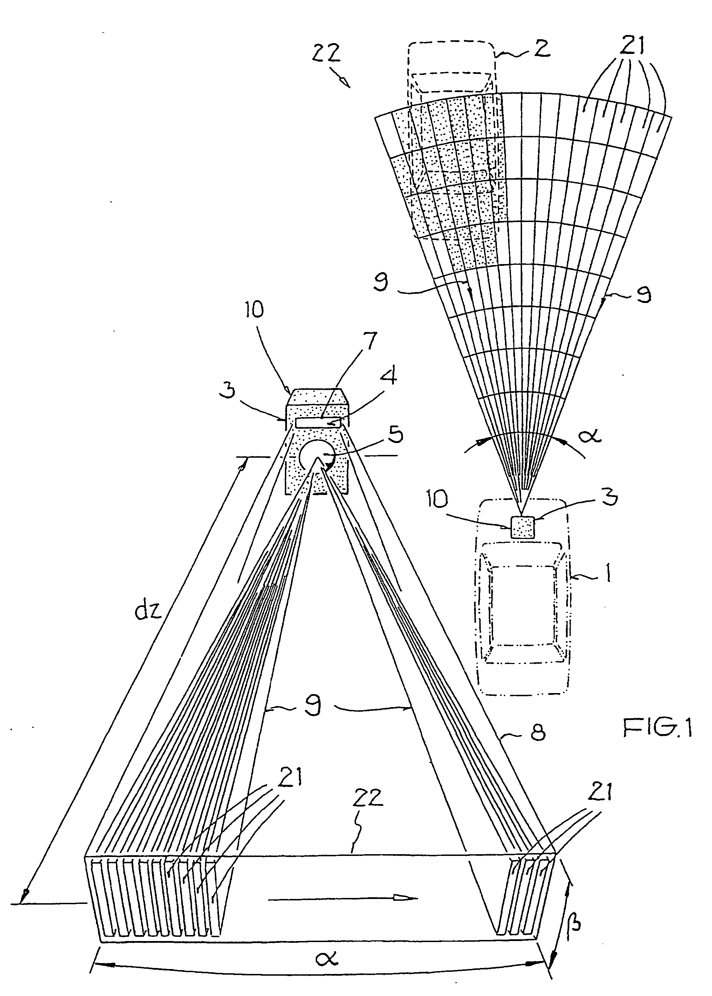

Gemäß der Figur 1 wird das bsp. als optisches Meßsystem ausgebildete Meßsystem 10 aus Meßeinheit 3 (Sendeeinheit 4, Empfangseinheit 5) und Steuereinheit 7 (Auswerteeinheit) an der Vorderseite des Kraftfahrzeugs 1 implementiert.

In mehreren aufeinanderfolgenden Meßvorgängen wird von der Sendeeinheit 4 der Meßeinheit 3 ein pulsförmiges Sendesignal 8 im infraroten (IR) Spektralbereich mit der Wellenlänge von bsp. 850 nm emittiert; das durch Reflexion an den sich im Öffnungsfeld 22, d.h. im durch das pulsförmige Sendesignal 8 erfaßten Entfernungsbereich und Winkelbereich (horizontaler Öffnungswinkel α bsp. 20°; vertikaler Öffnungswinkel β bsp. 3°) befindlichen Zielobjekten 2 (bsp. den vorausfahrenden Fahrzeugen oder Hindernissen) erhaltene Reflexionssignal 9 wird von der Empfangseinheit 5 der Meßeinheit 3 zu bestimmten Zeitpunkten während der Pulspause des Sendesignals 8 als analoges Empfangssignal detektiert. Von der Steuereinheit 7, bsp. eine CPU ("central process unit"), die gleichzeitig als Auswerteeinheit fungiert, wird das Empfangssignal zu bestimmten Zeitpunkten abgetastet ("sampling") und hierdurch die Genauigkeit der Entfernungsmessung erhöht; die abgetasteten Meßwerte werden hinsichtlich der Laufzeit ausgewertet, woraus die Entfernungsinformation und/oder durch Verarbeitung der Entfernungsinformation die Geschwindigkeitsinformation und/oder die Beschleunigungsinformation gewonnen wird, d.h. der Abstand dz zwischen dem Kraftfahrzeug als Bezugsobjekt 1 und dem Reflexionsobjekt als Zielobjekt 2 und/oder die Geschwindigkeit des Reflexionsobjekts als Zielobjekt 2 und/oder die Beschleunigung des Reflexionsobjekts als Zielobjekt 2. Das Öffnungsfeld 22 bzw. der erfaßte Winkelbereich (Öffnungswinkel α, β) wird in mehrere Zielsektoren 21 unterteilt (bsp. in 16 Zielsektoren 21), denen jeweils ein zu erfassendes Reflexionsobjekt als Zielobjekt 2 zugeordnet wird und mittels deren Information eine Objektmatrix der Zielobjekte 2 erstellt wird.

Bsp. wird eine geschwindigkeitsabhängige Abstandsregelung im Geschwindigkeitsbereich von v = 0 km/h bis 160 km/h vorgenommen, wobei eine Aktivierung des Fahrerassistenzsystems im Geschwindigkeitsbereich von v = 0 km/h bis 160 km/h zugelassen wird. Die Reichweite der Meßeinheit 3 (des Distanzsensors) beträgt bsp. 150 m. Als maximale Annäherungsgeschwindigkeit an ein Zielobjekt 2 (als maximal zulässige Relativgeschwindigkeit zwischen dem eigenen Kraftfahrzeug 1 und dem Zielobjekt 2) wird bsp. 60 km/h vorgegeben. Die maximale Verzögerungsrate wird abhängig von der Eigengeschwindigkeit des Kraftfahrzeugs 1 vorgegeben; bsp. sind als maximale Verzögerungswerte 2 m/s² bei einer Geschwindigkeit v des Kraftfahrzeugs 1 von > 50 km/h, 3 m/s² bei einer Geschwindigkeit v des Kraftfahrzeugs 1 zwischen 30 km/h und 50 km/h und 4 m/s² bei einer Geschwindigkeit v des Kraftfahrzeugs 1 von < 30 km/h zugelassen. Bei einer Berücksichtigung ruhender Zielobjekte 2 wird bsp. als maximale Verzögerungsrate 5 m/s² unabhängig von der Geschwindigkeit v des Kraftfahrzeugs 1 vorgegeben; alternativ hierzu kann aber auch die maximale Verzögerungsrate des Kraftfahrzeugs 1 bei einer Berücksichtigung ruhender Zielobjekte 2 geschwindigkeitsabhängig gewählt werden, d.h. für kleinere Geschwindigkeiten v des Kraftfahrzeugs 1 kann die Verzögerungsrate höher gewählt werden.

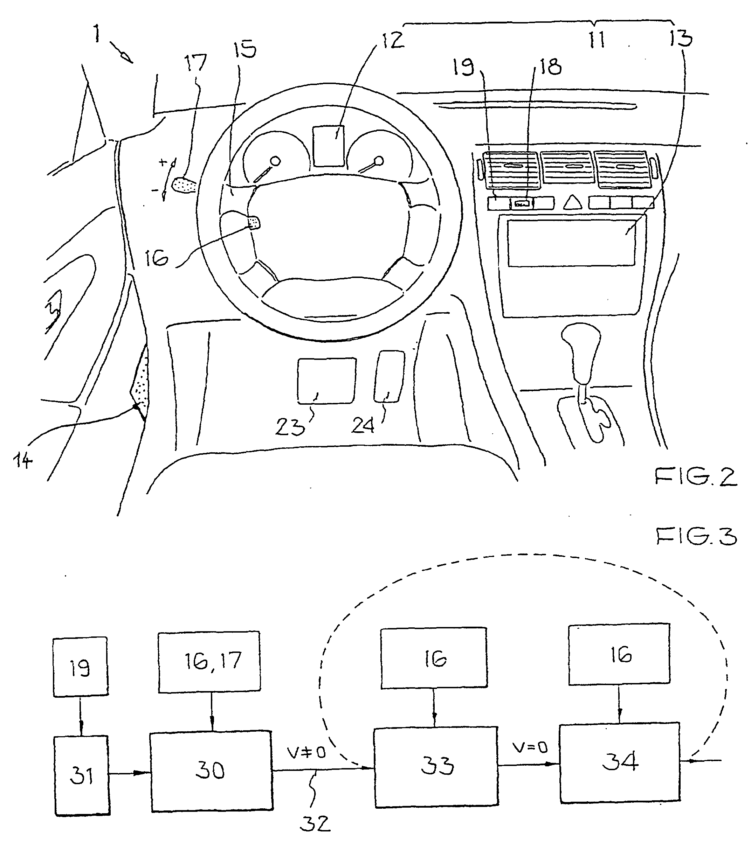

In der Figur 2 ist eine schematische Ansicht des Innenraums des Kraftfahrzeugs 1 mit der Anzeigeeinheit 11 mit Anzeigeelementen 12, 13, 14 und der Bedieneinheit 1 5 mit Bedienelementen 16, 17, 18, 19 dargestellt.

Mittels der Anzeigeeinheit 11 mit mindestens einem Anzeigeelement 12, 13, 14 können dem Bediener des Kraftfahrzeugs 1 verschiedene Systemzustände des Fahrerassistenzsystems und in Zusammenhang mit dem Fahrerassistenzsystem stehende Betriebszustände des Kraftfahrzeugs I auf optischem und/oder akustischen Wege mitgeteilt werden (bsp. mittels Displays, Warnlampen, Kontrolleuchten, Summern etc.). Bsp. werden bei aktiviertem Fahrerassistenzsystem dem Bediener mittels unterschiedlicher im Bereich des Armaturenbretts des Kraftfahrzeugs 1 angeordneter Anzeigeelemente 12, 13 und einem im Fußraum des Kraftfahrzeugs 1 angeordneten Summers 14 folgende Informationen bereitgestellt (bsp. durch blinkende oder dauerhaft illuminierte Anzeigen und/oder Warnlampen und/oder akustische Signale):
- Das Fahrerassistenzsystem ist aktiviert.
- Ein Zielobjekt 2 ist detektiert und als relevant klassifiziert; das Fahrerassistenzsystem versucht diesem Zielobjekt 2 zu folgen (mögliche Zielobjekte 2 sind bewegte Zielobjekte und nach Bedienerwunsch auch ruhende Zielobjekte).
- Die gemessene Geschwindigkeit des Zielobjekts 2 und die gespeicherte Maximalgeschwindigkeit für den Folgebetrieb als Setzgeschwindigkeit (bei deaktiviertem Fahrerassistenzsystem nur die gespeicherte Maximalgeschwindigkeit für den Folgebetrieb als Setzgeschwindigkeit).
- Die vom Fahrerassistenzsystem initiierte Betätigung der Bremsen des Kraftfahrzeugs 1 bei der Geschwindigkeitsregelung.
- Eine Aufforderung an den Bediener des Kraftfahrzeugs 1 zur Übernahme (zum Eingreifen) in einer Gefahrensituation; insbesondere dann, wenn in der Fahrspur des Kraftfahrzeugs 1 eine Kollisionsgefahr mit einem Zielobjekt 2 mit geringer Geschwindigkeit (ruhend oder bewegt) besteht.
- Eine Aufforderung an den Bediener des Kraftfahrzeugs 1 zum Anfahren des stehenden Kraftfahrzeugs 1 beim Entfernen des Zielobjekts 2 bzw. zur Freigabe des Folgebetriebs.

Mittels der Bedieneinheit 15 mit mindestens einem Bedienelement 16, 17, 18, 19 kann der Bediener des Kraftfahrzeugs 1 unterschiedliche Systemzustände des Fahrerassistenzsystems bzw. Fahrzustände vorgeben bzw. anwählen. Bsp. sind für den Bediener folgende Bedienelemente vorgesehen:
- Ein Schalter 19 9 als genereller Einschalter/Ausschalter zum manuellen Einschalten und Abschalten des Fahrerassistenzsystems.
- Ein Einstellrad 18 zur Vorgabe der Folgedistanz (des Abstands dz des eigenen Kraftfahrzeugs 1 zu einem detektierten und adaptierten, d.h. als relevant klassifizierten Zielobjekt 2) im Folgebetrieb und gleichzeitig zur Vorgabe der Anhaltedistanz beim Stillstand des eigenen Kraftfahrzeugs 1 (des Abstands dz des eigenen Kraftfahrzeugs 1 beim Stillstand zu einem stehenden Zielobjekt 2).
- Ein Einstellhebel 17 zur Aktivierung des Fahrerassistenzsystems bei eingeschaltetem Fahrerassistenzsystem (durch Bewegung des Einstellhebels in die "+"-Richtung: hierbei wird die momentane Fahrgeschwindigkeit als Maximalgeschwindigkeit bzw. Setzgeschwindigkeit für den Folgebetrieb herangezogen oder in die "-"-Richtung: hierbei wird die letzte gespeicherte Maximalgeschwindigkeit für den Folgebetrieb bzw. Setzgeschwindigkeit für den Folgebetrieb herangezogen) und gleichzeitig bei aktiviertem Fahrerassistenzsystem zur Variation der Maximalgeschwindigkeit bzw. Setzgeschwindigkeit für den Folgebetrieb (bsp, in Schritten von +/- 10 km/h durch Bewegung des Einstellhebels in die "+"-Richtung bzw. in die "-"-Richtung).
- Eine Multifunktionstaste 16 zur Aktivierung des Fahrerassistenzsystems bei eingeschaltetem Fahrerassistenzsystem (durch Drücken der Multifunktionstaste 16), zur Anwahl von ruhenden Zielobjekten 2 als relevante Zielobjekte 2 bei aktiviertem Fahrerassistenzsystem (während der Zeitdauer des Drückens der Multifunktionstaste 16: hierbei wird ein während dieser Zeitdauer detektiertes und als relevant klassifiziertes ruhendes Zielobjekt 2 gespeichert und für die Geschwindigkeitsregelung herangezogen) und zur Startfreigabe bei aktiviertem Fahrerassistenzsystem und einem Stillstand des eigenen Kraftfahrzeugs 1 (durch Drükken der Multifunktionstaste 16: hierbei wird als Maximalgeschwindigkeit bzw. Setzgeschwindigkeit für den Folgebetrieb entweder die letzte gespeicherte Maximalgeschwindigkeit für den Folgebetrieb oder die momentane Fahrgeschwindigkeit herangezogen).
- Das Bremspedal 23, durch dessen Betätigung das Fahrerassistenzsystem deaktiviert wird (mit Ausnahme einer kontinuierlichen Betätigung des Bremspedals 23 bei einem Stillstand des Kraftfahrzeugs 1: hier kann eine (Re-)Aktivierung durch Drücken der Multifunktionstaste 16 erfolgen, wobei als Maximalgeschwindigkeit bzw. Setzgeschwindigkeit für den Folgebetrieb entweder die letzte gespeicherte Maximalgeschwindigkeit für den Folgebetrieb oder die momentane Fahrgeschwindigkeit herangezogen wird); nach dem Lösen des Bremspedals 23 bleibt das aktivierte Kraftfahrzeug 1 zunächst im ruhenden Zustand, erst nach wiederholter Betätigung der Multifunktionstaste 16 (Startfreigabe) nimmt es den Folgebetrieb wieder auf (hierdurch ist es möglich, bereits im Wartezustand die gewünschte Maximalgeschwindigkeit bzw. Setzgeschwindigkeit für den Folgebetrieb einzustellen).
- Das Gaspedal 24, durch dessen Betätigung alle Funktionen des Fahrerassistenzsystems bis zum Loslassen des Gaspedals 24 aufgehoben werden.

In der Figur 3 sind die verschiedenen Funktionszustände des Fahrerassistenzsystems schematisch dargestellt.
- Aktivierung 30 des Fahrerassistenzsystems:
   Nach dem Einschalten 31 des Fahrerassistenzsystems durch Betätigung des Schalters (Ein/Ausschalters) 19 bei ausgeschaltetem Fahrerassistenzsystem kann das Fahrerassistenzsystem durch Betätigung des Einstellhebels 17 oder durch Drücken der Multifunktionstaste 16 im Geschwindigkeitsbereich zwischen 0 km/h und 1 60 km/h aktiviert werden, insbesondere auch nach einem Stillstand des eigenen Kraftfahrzeugs 1 bei kontinuierlicher Betätigung des Bremspedals 23; als Maximalgeschwindigkeit bzw. Setzgeschwindigkeit für den Folgebetrieb 32 wird entweder die letzte gespeicherte Maximalgeschwindigkeit für den Folgebetrieb 32 oder die momentane Fahrgeschwindigkeit herangezogen.
   Eine erfolgreiche Aktivierung des Fahrerassistenzsystems wird dem Bediener des Kraftfahrzeugs 1 bsp. durch ein optisches und/oder akustisches Signal mitgeteilt.
   Die Aktivierung 30 des Fahrerassistenzsystems ist nicht möglich, wenn die Geschwindigkeit des Kraftfahrzeugs 1 höher als 160 km/h ist oder wenn das Bremspedal 23 betätigt wird (außer bei einer kontinuierlichen Betätigung des Bremspedals 23 beim Stillstand des eigenen Kraftfahrzeugs 1).
- Folgebetrieb 32:
   Bei aktiviertem Fahrerassistenzsystem erfolgt entweder eine Geschwindigkeitsregelung analog zu einem Tempomat, falls kein Zielobjekt 2 detektiert oder kein Zielobjekt 2 als relevant klassifiziert wurde oder aber eine abstandsabhängige Geschwindigkeitsregelung hinter einem detektierten und als relevant bewerteten Zielobjekt 2 mit einem über das Einstellrad 18 vorgegebenen Folgeabstand bis zum Stillstand des eigenen Kraftfahrzeugs 1, d.h. das eigene Kraftfahrzeug 1 hält hinter dem detektierten und als relevant bewerteten Zielobjekt 2 an, falls dieses innerhalb der Reichweite der Meßeinheit 3 (des Distanzsensors) von bsp. 150 m anhält.
   Eine Warnung an den Bediener des Kraftfahrzeugs 1 erfolgt vor stehenden und als relevant bewerteten Zielobjekten 2 sowie beim Erkennen von Gefahrensituationen, insbesondere wenn ein Eingreifen des Bedieners des Kraftfahrzeugs 1 erforderlich wird, bsp. bei der Annäherung an ein Fahrzeug mit einer für das Fahrerassistenzsystem zu hohen Relativgeschwindigkeit zwischen dem eigenen Kraftfahrzeug 1 und einem Zielobjekt 2 oder der Detektion eines stehenden Hindernisses in der eigenen Fahrspur.
   Die vorgegebene Setzgeschwindigkeit als Maximalgeschwindigkeit für den Folgebetrieb 32 kann jederzeit bei aktiviertem Fahrerassistenzsystem durch Betätigung des Einstellhebels 17 verändert werden, bsp. in Schritten von 10 km/h durch Betätigung des Einstellhebels in die "+"-Richtung bzw. die "-"-Richtung; bei einer Vorgabe von 0 km/h als Setzgeschwindigkeit wird das eigene Kraftfahrzeug 1 langsam bis zum Stillstand abgebremst (automatisches Anhalten ohne Zielobjekt 2).
- Berücksichtigung ruhender Zielobjekte 33:
   Die Annäherung an ein bereits stehendes Hindernis ist im normalen Fahrbetrieb eher die Ausnahme; als ruhendes Zielobjekt 2 wird jedes Zielobjekt 2 mit sehr geringer Geschwindigkeit (bsp. < 5 km/h) oder sehr geringer Geschwindigkeitskomponente in der Fahrtrichtung des eigenen Kraftfahrzeugs 1 bewertet, bsp. ein stehendes Fahrzeug am Ende eines Staus oder ein Fußgänger oder ein die eigene Fahrspur kreuzendes Fahrzeug.
   Beim Drücken der Multifunktionstaste 16 werden diese ruhende Zielobjekte 2 während der Betätigungsdauer der Multifunktionstaste 1 6 mit in die abstandsabhängige Geschwindigkeitsregelung einbezogen, so daß nach einer dem Bediener des Kraftfahrzeugs 1 akustisch und/oder optisch mitgeteilten Bestätigung, daß ein ruhendes Zielobjekt 2 detektiert und als relevant klassifiziert wurde, hinter diesem ruhenden Zielobjekt 2 angehalten wird.
- Startfreigabe 34:
   Nach einem Stillstand des eigenen Kraftfahrzeugs 1 wird das Fahrerassistenzsystem bei einer gespeicherten Maximalgeschwindigkeit für den Folgebetrieb 32 (Setzgeschwindigkeit) von > 0 km/h aktiviert. Beim Drücken der Multifunktionstaste 16 beschleunigt das Kraftfahrzeug 1 ggf. unter Berücksichtigung eines neuen Zielobjekts 2 bis zur gespeicherten Maximalgeschwindigkeit für den Folgebetrieb 32 (Setzgeschwindigkeit), wenn sich kein Hindernis vor dem eigenen Kraftfahrzeug 1 befindet. Falls sich dagegen ein Hindernis vor dem eigenen Kraftfahrzeug 1 befindet bleibt das Kraftfahrzeug 1 stehen; nach dem Entfernen des Hindernisses bzw. Zielobjekts 2 kann der Bediener des Kraftfahrzeugs 1 eine erneute Startfreigabe durch Drücken der Multifunktionstaste 16 vorgeben (falls der Bediener innerhalb einer kurzen Zeitspanne nach dem Entfernen des Hindernisses bzw. Zielobjekts 2, bsp. innerhalb von 2 s nichts unternimmt, wird er bsp. durch ein akustisches Signal zur Startfreigabe 34 aufgefordert).
- Übersteuerung des Fahrerassistenzsystems durch den Bediener:
   Der Bediener des Kraftfahrzeugs 1 behält zu jeder Zeit die volle Kontrolle über das Kraftfahrzeug 1. Bei einer Betätigung des Gaspedals 24 ruhen alle Funktionen des Fahrerassistenzsystems bis zum Loslassen des Gaspedals 24; beschleunigt der Bediener das Kraftfahrzeug 1 dabei auf einen Geschwindigkeitswert v der sich um einen bestimmten Betrag Δv von der gespeicherten Maximalgeschwindigkeit für den Folgebetrieb 32 (Setzgeschwindigkeit) unterscheidet (bsp. um mehr als 20 km/h größer als die gespeicherte Maximalgeschwindigkeit für den Folgebetrieb 32 ist), wird zur Vermeidung abrupter Bremsvorgänge beim Loslassen des Gaspedals 24 die gespeicherte Maximalgeschwindigkeit für den Folgebetrieb 32 um Δv nachgeführt. Bei einer Betätigung des Bremspedals 23 wird das Fahrerassistenzsystem deaktiviert und muß vom Bediener (falls gewünscht) wieder reaktiviert werden.
- Deaktivierung des Fahrerassistenzsystems:
   Bei aktiviertem Fahrerassistenzsystem wird das Fahrerassistenzsystem durch Betätigung des Bremspedals 23 deaktiviert, insbesondere auch nach einem Stillstand des eigenen Kraftfahrzeugs 1 beim Loslassen des vom Bediener gedrückten Bremspedals 23 und erneuten Niederdrücken des Bremspedals 23.
   Durch Betätigung des Ein/Ausschalters 19 bei eingeschaltetem Fahrerassistenzsystem kann das Fahrerassistenzsystem ausgeschaltet werden.
   Beim Erkennen von nicht spezifizierten Betriebsbedingungen bzw. undefinierten Zuständen (bsp. aufgrund eines rutschigen Fahrbahnbelags, bsp. infolge von Eis auf der Fahrbahn) deaktiviert sich das Fahrerassistenzsystem selbst und gibt ein akustisches und/oder optisches und/oder haptisches Warnsignal an den Bediener des Kraftfahrzeugs 1.

## Patentansprüche

1. Verfahren zum Betrieb eines Fahrerassistenzsystems für Kraftfahrzeuge (1 ), bei dem im Folgebetrieb (32) eine vom Abstand (dz) zu detektierten und als relevant klassifizierten Zielobjekten (2) abhängige Regelung der Geschwindigkeit des Kraftfahrzeugs (1) erfolgt,
**dadurch gekennzeichnet,**
**daß** durch die Betätigung eines vom Bediener des Kraftfahrzeugs (1) zu betätigenden Bedienelements (16) im Folgebetrieb (32) die für die Geschwindigkeitsregelung herangezogenen relevanten Zielobjekte (2) ausgewählt werden.

2. Verfahren nach Anspruch 1, **dadurch gekennzeichnet, daß** bei der Auswahl der für die Geschwindigkeitsregelung herangezogenen relevanten Zielobjekte (2) bewegte Zielobjekte immer und ruhende Zielobjekte durch die vom Bediener des Kraftfahrzeugs (1) vorgenommene Betätigung des Bedienelements (16) berücksichtigt werden.

3. Verfahren nach Anspruch 2, **dadurch gekennzeichnet, daß** bei der Auswahl der für die Geschwindigkeitsregelung herangezogenen relevanten Zielobjekte (2) alle detektierten ruhenden und als relevant klassifizierten Zielobjekte (2) berücksichtigt werden.

4. Verfahren nach Anspruch 2 oder 3, **dadurch gekennzeichnet, daß** ruhende Zielobjekte (2) nur während der vom Bediener des Kraftfahrzeugs (1 ) vorgenommenen Betätigung des Bedienelements (16) bei der Auswahl der für die Geschwindigkeitsregelung herangezogenen relevanten Zielobjekte (2) berücksichtigt werden.

5. Verfahren nach einem der Ansprüche 2 bis 4, **dadurch gekennzeichnet, daß** ruhende Zielobjekte (2) eine kurze Zeitspanne nach der vom Bediener des Kraftfahrzeugs (1) vorgenommenen Betätigung des Bedienelements (16) bei der Auswahl der für die Geschwindigkeitsregelung herangezogenen relevanten Zielobjekte (2) berücksichtigt werden.

6. Verfahren nach einem der Ansprüche 2 bis 5, **dadurch gekennzeichnet, daß** die bereits vor der Betätigung des Bedienelements (16) detektierten ruhenden Zielobjekte (2) durch die vom Bediener des Kraftfahrzeugs vorgenommene Betätigung des Bedienelements (16) als relevante Zielobjekte (2) klassifiziert werden.

7. Verfahren nach Anspruch 6, **dadurch gekennzeichnet, daß** die bereits vor der Betätigung des Bedienelements (16) detektierten ruhenden Zielobjekte (2) dem Bediener des Kraftfahrzeugs (1) angezeigt und durch die Betätigung des Bedienelements (16) vom Bediener des Kraftfahrzeugs (1) bestätigt werden.

8. Verfahren nach einem der Ansprüche 1 bis 7, **dadurch gekennzeichnet, daß** alle als relevant klassifizierten Zielobjekte (2) bis zur Deaktivierung des Fahrerassistenzsystems für die Geschwindigkeitsregelung herangezogen werden.

9. Verfahren nach einem der Ansprüche 2 bis 8, **dadurch gekennzeichnet, daß** während der Berücksichtigung von ruhenden Zielobjekten (2) bei der Auswahl der für die Geschwindigkeitsregelung herangezogenen relevanten Zielobjekte (2) die dem Folgebetrieb (32) zugrunde gelegten Regelgrößen des Fahrerassistenzsystems derart verändert werden, daß die Regelzeit und/oder die Reaktionszeit der Geschwindigkeitsregelung verkürzt wird.

10. Verfahren nach Anspruch 9, **dadurch gekennzeichnet, daß** während der Berücksichtigung von ruhenden Zielobjekten (2) bei der Auswahl der für die Geschwindigkeitsregelung herangezogenen relevanten Zielobjekte (2) schnellere Änderungen der Regelgrößen bei der Geschwindigkeitsregelung zugelassen werden und/oder Regelgrößen auf einen kritischeren Schwellwert gesetzt werden und/oder die Redundanz für die Geschwindigkeitsregelung verringert wird.

11. Verfahren nach Anspruch 9 oder 10, **dadurch gekennzeichnet, daß** während der Berücksichtigung von ruhenden Zielobjekten (2) bei der Auswahl der für die Geschwindigkeitsregelung herangezogenen relevanten Zielobjekte (2) der maximale Abstand (dz) zur Detektion von Zielobjekten (2) erweitert wird und/oder die Anzahl der Meßzyklen zur Klassifizierung der Zielobjekte (2) verringert wird und/oder die Änderung der Verzögerung des Kraftfahrzeugs (1) erhöht wird und/oder die maximal zulässige Verzögerung des Kraftfahrzeugs (1) erhöht wird.

12. Verfahren nach einem der Ansprüche 2 bis 11, **dadurch gekennzeichnet, daß** während der Berücksichtigung von ruhenden Zielobjekten (2) bei der Auswahl der für die Geschwindigkeitsregelung herangezogenen relevanten Zielobjekte (2) bei der Detektion eines ruhenden Zielobjekts (2) eine Rückmeldung an den Bediener des Kraftfahrzeugs (1) erfolgt.

13. Verfahren nach einem der Ansprüche 1 bis 12, **dadurch gekennzeichnet, daß** beim Erkennen einer Kollisionsgefahr mit einem relevanten Zielobjekt (2) eine Rückmeldung an den Bediener des Kraftfahrzeugs (1) erfolgt.

14. Verfahren nach Anspruch 12 oder 13, **dadurch gekennzeichnet, daß** eine akustische und/oder optische und/oder haptische Rückmeldung an den Bediener des Kraftfahrzeugs (1) erfolgt.

15. Verfahren nach einem der Ansprüche 1 bis 14, **dadurch gekennzeichnet, daß** durch die Betätigung des Bedienelements (16) bei deaktiviertem Fahrerassistenzsystem eine Aktivierung des Fahrerassistenzsystems vorgenommen wird.

16. Verfahren nach einem der Ansprüche 1 bis 15, **dadurch gekennzeichnet, daß** durch die Betätigung des Bedienelements (16) nach dem Stillstand des Kraftfahrzeugs (1) hinter einem relevanten Zielobjekt (2) der Folgebetrieb (32) freigegeben wird.

17. Verfahren nach Anspruch 16, **dadurch gekennzeichnet, daß** das Bedienelement (16) unmittelbar nach dem Entfernen des relevanten Zielobjekts (2) zur Freigabe des Folgebetriebs (32) vom Bediener des Kraftfahrzeugs (1) betätigt werden muß.

18. Verfahren nach Anspruch 16, **dadurch gekennzeichnet, daß** nach dem Entfernen des relevanten Zielobjekts (2) das Kraftfahrzeug (1) automatisch in eine Schleichfahrt mit Geschwindigkeitsregelung übergeht, und daß durch die Betätigung des Bedienelements (16) der Folgebetrieb (32) mit Normalgeschwindigkeit freigegeben wird.

19. Verfahren nach einem der Ansprüche 1 bis 18, **dadurch gekennzeichnet, daß** die Betätigung des Bedienelements (16) am Lenkrad des Kraftfahrzeugs (1) vorgenommen wird.

20. Verfahren nach einem der Ansprüche 1 bis 19, **dadurch gekennzeichnet, daß** als Bedienelement (16) ein Taster betätigt wird.

21. Fahrerassistenzsystem für ein Kraftfahrzeug zur Erkennung und Klassifikation von Zielobjekten und Regelung der Geschwindigkeit des Kraftfahrzeugs (1) abhängig vom Abstand (dz) zu einem als relevant klassifizierten Zielobjekten (2), zur Durchführung des Verfahrens nach einem der vorangehenden Ansprüche, **dadurch gekennzeichnet, daß** ein vom Bediener des Kraftfahrzeugs (1) zu betätigendes Bedienelement (16) vorgesehen ist, durch dessen Betätigung im Folgebetrieb (32) die für die Geschwindigkeitsregelung herangezogenen relevanten Zielobjekte (2) auswählbar sind.

## Claims

1. A method of operating a driver support system for motor vehicles (1) wherein regulation of the speed of the motor vehicle (1) in the course of a following process (32) is effected in dependence on the distance (dz) to target objects (2) that have been detected and classified as relevant,
**characterized in that**
the relevant target objects (2) drawn upon for the speed regulating process during the following process (32) are selected by the actuation of an actuating element (16) which is to be operated by the driver of the motor vehicle (1).

2. A method in accordance with Claim 1, **characterized in that**, when selecting the relevant target objects (2) that are to be drawn upon for the speed regulating process, moving target objects are always considered and static target objects are brought into consideration by the actuation of the actuating element (16) that is effected by the driver of the motor vehicle (1).

3. A method in accordance with Claim 2, **characterized in that**, when selecting the relevant target objects (2) that are to be drawn upon for the speed regulating process, all of the static target objects (2) that have been detected and classified as relevant are taken into consideration.

4. A method in accordance with Claim 2 or 3, **characterized in that**, when selecting the relevant target objects (2) that are to be drawn upon for the speed regulating process, static target objects (2) are taken into consideration only during the actuation of the actuating element (16) that is effected by the driver of the motor vehicle (1).

5. A method in accordance with any of the Claims 2 to 4, **characterized in that**, when selecting the relevant target objects (2) that are to be drawn upon for the speed regulating process, static target objects (2) are taken into consideration a short time interval after the actuation of the actuating element (16) that is effected by the driver of the motor vehicle (1).

6. A method in accordance with any of the Claims 2 to 5, **characterized in that** those static target objects (2) that have already been detected prior to the actuation of the actuating element (16) are classified as relevant target objects (2) by the actuation of the actuating element (16) that is effected by the driver of the motor vehicle.

7. A method in accordance with Claim 6, **characterized in that** those static target objects (2) that have already been detected prior to the actuation of the actuating element (16) are indicated to the driver of the motor vehicle (1) and are confirmed by the actuation of the actuating element (16) by the driver of the motor vehicle (1).

8. A method in accordance with any of the Claims 1 to 7, **characterized in that** all of the target objects (2) that have been classified as relevant are drawn upon for the speed regulating process until the driver support system is deactivated.

9. A method in accordance with any of the Claims 2 to 8, **characterized in that**, during the consideration of static target objects (2) in the course of selecting the relevant target objects (2) that are to be drawn upon for the speed regulating process, the controlled variables of the driver support system forming the basis for the following process (32) are changed in such a manner that the control time and/or the response time of the speed regulating process are shortened.

10. A method in accordance with Claim 9, **characterized in that**, during the consideration of static target objects (2) in the course of selecting the relevant target objects (2) that are to be drawn upon for the speed regulating process, faster changes of the controlled variables are permitted during the speed regulating process and/or controlled variables are set to a more critical threshold value and/or the redundancy for the speed regulating process is reduced.

11. A method in accordance with claim 9 or 10 **characterized in that**, during the consideration of static target objects (2) in the course of selecting the relevant target objects (2) that are to be drawn upon for the speed regulation process, the maximal distance (dz) to the detection of target objects (2) is extended and/or the number of measuring cycles for classifying the target objects (2) is reduced and/or the change in the deceleration of the motor vehicle (1) is increased and/or the maximally permissible deceleration of the motor vehicle (1) is increased.

12. A method in accordance with any of the claims 2 to 11 **characterized in that**, during the consideration of static target objects (2) in the course of selecting the relevant target objects (2) that are to be drawn upon for the speed regulating process, once a static target object (2) is detected, a feedback is given to the driver of the motor vehicle (1).

13. A method in accordance with any of the claims 1 to 12 **characterized in that** a feedback is given to the driver of the motor vehicle (1) when the risk of a collision with a relevant target object (2) is detected.

14. A method in accordance with claim 12 or 13 **characterized in that** an acoustic and/or optical and/or haptic feedback is given to the driver of the motor vehicle (1).

15. A method in accordance with any of the claims 1 to 14 **characterized in that** by the actuation of the actuating element (16) the driver support system is activated when the driver support system had been deactivated.

16. A method in accordance with any of the claims 1 to 15 **characterized in that** after the standstill of the motor vehicle (1) behind a relevant target object (2) the following process (32) is started by the actuation of the actuating element (16).

17. A method in accordance with claim 16 **characterized in that** the actuating element (16) must be actuated by the driver of the motor vehicle (1) immediately after the removal of the relevant target object (2) for starting the following process (32).

18. A method in accordance with claim 16 **characterized in that** after the removal of the relevant target object (2) the motor vehicle (1) passes automatically into a crawl motion with speed regulation and that the following process (32) at normal speed is started by the actuation of the actuating element (16).

19. A method in accordance with any of the claims 1 to 18 **characterized in that** the actuating element (16) is actuated at the steering wheel of the motor vehicle (1).

20. A method in accordance with any of the claims 1 to 19 **characterized in that** the actuating element (16) is actuated as a key button.

21. A driver support system for a motor vehicle for the detection and classification of target objects and the regulation of the speed of the motor vehicle (1) in dependence on the distance (dz) to a target object (2) classified as relevant, for carrying out the method in accordance with any of the preceding claims **characterized in that** an actuating element (16) to be actuated by the driver of the motor vehicle (1) is provided by the actuation of which in the course of the following process (32) the target objects (2) can be selected that are to be drawn upon for speed regulation.

## Revendications

1. Procédé d'exploitation d'un système d'assistance au conducteur pour véhicules (1), selon lequel en mode régulé (32), est effectuée une régulation de la vitesse du véhicule (1) en fonction de l'espacement (dz) à des cibles (2) détectées et classifiées pertinentes,
**caractérisé en ce que**
par la manoeuvre d'un élément de commande (16) à actionner par le conducteur du véhicule (1) en mode régulé (32), sont sélectionnées les cibles (2) pertinentes utilisées pour la régulation de vitesse.

2. Procédé selon la revendication 1, **caractérisé en ce que**, lors de la sélection des cibles (2) pertinentes utilisées pour la régulation de vitesse, des cibles mobiles en permanence et des cibles stationnaires sont prises en compte par la manoeuvre de l'élément de commande (16) effectuée par le conducteur du véhicule (1).

3. Procédé selon la revendication 2, **caractérisé en ce que**, lors de la sélection des cibles (2) pertinentes utilisées pour la régulation de vitesse, toutes les cibles (2) stationnaires et classifiées pertinentes détectées sont prises en compte.

4. Procédé selon la revendication 2 ou 3, **caractérisé en ce que** des cibles fixes (2)) sont prises en compte uniquement durant la manoeuvre effectuée par le conducteur du véhicule (1) de l'élément de commande (16) lors de la sélection des cibles (2) pertinentes utilisées pour la régulation de vitesse.

5. Procédé selon une des revendications 2 à 4, **caractérisé en ce que** des cibles fixes (2) sont prises en compte durant un court instant après la manoeuvre de l'élément de commande (16) effectuée par le conducteur du véhicule (1) lors de la sélection des cibles (2) pertinentes utilisées pour la régulation de vitesse.

6. Procédé selon une des revendications 2 à 5, **caractérisé en ce que** les cibles (2à fixes déjà détectées avant la manoeuvre de l'élément de commande (16) sont classifiées en tant que cibles pertinentes (2) par la manoeuvre de l'élément de commande (16) effectuée par le conducteur du véhicule.

7. Procédé selon la revendication 6, **caractérisé en ce que** les cibles (2) stationnaires déjà détectées avant la manoeuvre de l'élément de commande (16) sont signalées au conducteur du véhicule (1) et sont confirmées par la manoeuvre de l'élément de commande (16) par le conducteur du véhicule (1).

8. Procédé selon une des revendications 1 à 7, **caractérisé en ce que** toutes les cibles (2) classifiées pertinentes sont utilisées pour la régulation de vitesse jusqu'à la désactivation du système d'assistance au conducteur.

9. Procédé selon une des revendications 2 à 8, **caractérisé en ce que** durant la prise en compte de cibles fixes (2) lors de la sélection des cibles (2) pertinentes utilisées pour la régulation de vitesse, les grandeurs de régulation du système d'assistance au conducteur pour le mode régulé (32), sont modifiées de telle sorte que le temps de régulation et/ou le temps de réaction de la régulation de vitesse est abrégé.

10. Procédé selon la revendication 9, **caractérisé en ce que** durant la prise en compte de cibles fixes (2), lors de la sélection des cibles (2) pertinentes utilisées pour la régulation de vitesse, des modifications plus rapides des grandeurs de régulation sont permises lors de la régulation de vitesse et/ou des grandeurs de régulation sont fixées à une valeur de seuil plus critique et/ou la redondance pour la régulation de vitesse est réduite.

11. Procédé selon la revendication 9 ou 10, **caractérisé en ce que** pendant la prise en compte des cibles fixes (2), lors de la sélection des cibles (2) pertinentes utilisées pour la régulation de vitesse, l'espace maximal (dz) pour la détection des cibles (2) est augmenté et/ou le nombre des cycles de mesure pour la classification des cibles (2) est réduit et/ou la variation de ralentissement du véhicule (1) est élevée et/ou le ralentissement maximal admissible du véhicule (1) est élevé.

12. Procédé selon l'une des revendications 2 à 11, **caractérisé en ce que** pendant la prise en compte des cibles fixes (2), lors de la sélection des cibles (2) pertinentes utilisées pour la régulation de vitesse, un message de retour est adressé au conducteur du véhicule (1) à la détection d'une cible fixe (2).

13. Procédé selon l'une des revendications 1 à 12, **caractérisé en ce qu'**un message de retour est adressé au conducteur du véhicule (1) à la reconnaissance d'un risque de collision avec une cible (2) pertinente.

14. Procédé selon la revendication 12 ou 13, **caractérisé en ce qu'**un message de retour acoustique et/ou optique et/ou haptique est adressé au conducteur du véhicule (1).

15. Procédé selon l'une des revendications 1 à 14, **caractérisé en ce qu'**une activation du système d'assistance au conducteur est déclenchée par la manoeuvre de l'élément de commande (16) lorsque le système d'assistance au conducteur est désactivé.

16. Procédé selon l'une des revendications 1 à 15, **caractérisé en ce que** le mode régulé (32) est activé par la manoeuvre de l'élément de commande (16) après l'arrêt du véhicule (1) derrière une cible (2) pertinente.

17. Procédé selon la revendication 16, **caractérisé en ce que** l'élément de commande (16) doit être manoeuvré par le conducteur du véhicule (1) immédiatement après retrait de la cible (2) pertinente pour l'activation du mode régulé (32).

18. Procédé selon la revendication 16, **caractérisé en ce que** le véhicule (1) passe automatiquement en vitesse réduite avec régulation de vitesse après retrait de la cible (2) pertinente, et **en ce que** le mode régulé (32) est activé à la vitesse normale par manoeuvre de l'élément de commande (16).

19. Procédé selon l'une des revendications 1 à 18, **caractérisé en ce que** la manoeuvre de l'élément de commande (16) est effectuée sur le volant du véhicule (1).

20. Procédé selon l'une des revendications 1 à 19, **caractérisé en ce qu'**un bouton-poussoir est manoeuvré en tant qu'élément de commande (16).

21. Système d'assistance au conducteur pour véhicules pour la détection et la classification de cibles et la régulation de vitesse du véhicule (1) en fonction de l'espacement (dz) à une cible (2) classifiée comme pertinente pour l'exécution du procédé selon l'une des revendications précédentes, **caractérisé en ce qu'**un élément de commande (16) à manoeuvrer par le conducteur du véhicule (1) est prévu, dont la manoeuvre en mode régulé (32) rend sélectionnables les cibles (2) pertinentes utilisées pour la régulation de vitesse.
